# EUROPÄISCHE PATENTSCHRIFT

(11) **EP 1 897 206 B1**
(45) Veröffentlichungstag und Bekanntmachung des Hinweises auf die Patenterteilung: **06.05.2009**
(21) Anmeldenummer: 06762286.0
(22) Anmeldetag: 29.06.2006
(51) Int. Cl.: H02K 5/167, F16C 35/02, B29C 45/14

(54) **LAGERANORDNUNG**
BEARING ARRANGEMENT
ENSEMBLE PALIER

(30) Priorität: 29.06.2005 DE 102005030237; 20.03.2006 DE 102006012612
(43) Veröffentlichungstag der Anmeldung: 12.03.2008
(73) Patentinhaber: VALEO SYSTEMES D'ESSUYAGE, 78321 La Verrière (FR)
(72) Erfinder: HARTMANN, Werner, 71665 Vaihingen/Enz (DE); WELLHÄUSSER, Martin, 74372 Sersheim (DE); HEUBERGER, Christof, 71706 Markgröningen (DE); STEFANI, Siegfried, 71739 Oberriexingen (DE)
(74) Vertreter: Jahn, Wolf-Diethart
(86) Internationale Anmeldenummer: PCT/EP2006/006337
(87) Internationale Veröffentlichungsnummer: WO 2007/000355

(56) Entgegenhaltungen:
- DE-A1- 10 117 573
- JP-A- 2002 333 015
- US-A- 5 399 025
- US-A- 5 794 326

## Beschreibung

Die Erfindung bezieht sich auf eine Lageranordnung gemäß Oberbegriff Patentanspruch 1.

Ein elektromotorischer Hilfsantrieb für Funktionselemente eines Fahrzeugs ist im Sinne der Erfindung insbesondere ein Antrieb für Scheibenwischer oder Scheibenwischeranlagen, aber auch ein Antrieb zum Öffnen und Schließen eines Fahrzeugfensters, eines Schiebedachs oder zum Ein- und Ausklappen von Fahrzeugspiegeln usw.

Speziell bei elektromotorischen Antrieben für Scheibenwischer ist es bekannt (DE 101 17 573), die Motor- oder Ankerwelle des Elektromotors mehrfach zu lagern, und zwar mit jeweils einem Primär- oder Hauptlager im Motor- und Getriebegehäuse sowie mit einer ein zusätzliches Lager bildenden Lageranordnung für das dem Motor entfernt liegende Wellenende. Für diese Lageranordnung weist das Getriebegehäuse eine zur Gehäuseaußenseite hin offene Kammer auf, in die das Wellenende durch eine Durchtrittsöffnung vom Innenraum des Getriebegehäuses her hineinreicht und in der zur Lagerung des Wellenendes eine zur offenen Seite der Kammer hin geschlossene Lagerbuchse vorgesehen ist, die nach dem Aufsetzen auf das Wellenende durch Einbringen einer aushärtenden oder erstarrenden Fixier- oder Füllmasse in der Kammer fixiert wird.

Geeignete, zur Verfügung stehende Fixier- oder Füllmassen haben die Eigenschaft, dass sie beim Aushärten oder Erstarren in einem nicht unerheblichen Maße schrumpfen oder schwinden, was zu einer mangelhaften Abdichtung des Getriebegehäuses im Bereich der Lageranordnung führen kann.

Aufgabe der Erfindung ist es, eine Lageranordnung mit verbesserten Eigenschaften, insbesondere auch bezüglich der Abdichtung des Getriebegehäuses aufzuzeigen.

Zur Lösung dieser Aufgabe ist eine Lageranordnung entsprechend dem Patentanspruch 1 ausgebildet.

Bei der Erfindung wird das beim Aushärten oder Erstarren auftretende Schwinden des Fixier- oder Füllmaterials genutzt, um den von diesem Material gebildeten Fixier- und Füllkörper besonders fest und dicht mit dem Getriebegehäuse zu verbinden, und zwar dadurch, dass in der Kammer wenigstens eine Fixier- und Dichtfläche derart vorgesehen ist, dass sich das diese Fläche umschließende Material des Fixier- und Füllkörpers beim Schwinden fest und dauerelastisch gegen diese Fläche anlegt.

Bei einer Ausführung der Erfindung wird als Lagerbuchse eine beidendig offene, hülsenartige Buchse verwendet, so dass beim Einbringen der Fixier- und Füllmasse in die Kammer diese Masse teilweise auch in die Lagerbuchse bis an das dortige Wellenende eintreten kann, womit sich beim Erstarren der Fixier- und Füllmasse als axiale Abstützung für die Welle ein in die Lagerbuchse hineinreichender Abschnitt des Füllkörpers bildet.

Weiterbildungen der Erfindung sind Gegenstand der Unteransprüche. Die Erfindung wird im Folgenden anhand der Figuren an Ausführungsbeispielen näher erläutert.
Es zeigen:
- Fig. 1: in vereinfachter Darstellung einen Teilschnitt durch das Getriebegehäuse eines elektromotorischen Hilfsantriebs im Bereich einer ein zusätzliches Stützlager bildenden Lageranordnung gemäß der Erfindung;
- Fig. 2: eine Ansicht wie Figur 1, jedoch vor dem Einbringen der Fixier- und Füllmasse;
- Fig. 2a: einen vergrößerten Ausschnitt von Fig. 2;
- Fig. 3 - 4: jeweils in Darstellungen ähnlich Figur 1 weitere mögliche Ausführungsformen der Lageranordnung;
- Fig. 4a: einen vergrößerten Ausschnitt von Fig. 4 jedoch ohne den Füllkörper;
- Fig. 5: in Darstellungen ähnlich Figur 1 eine weitere mögliche Ausführungsform der Lageranordnung;
- Fig. 6 - 9: eine weitere Ausführungsform der Erfindung mit Verwendung einer Anlaufscheibe.

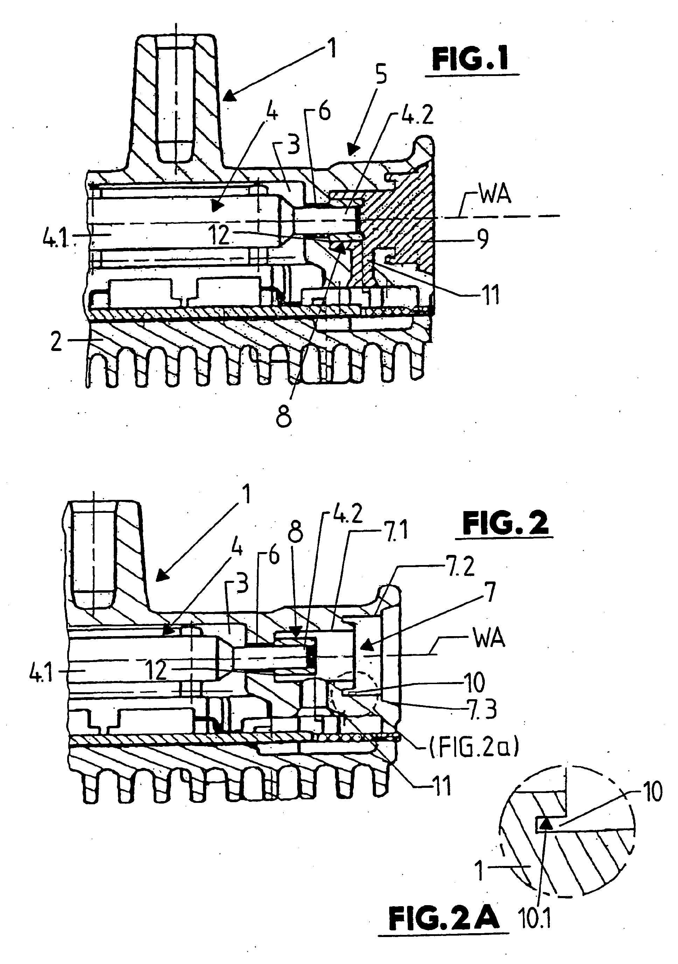

In den Figuren 1 bis 3 ist das Getriebegehäuse eines elektromotorischen Hilfsantriebs, beispielsweise eines Scheibenwischerantriebs. In dem durch einen Deckel 2 verschlossenen Innenraum 3 des Getriebegehäuses 1 ist eine Motor- oder Ankerwelle 4 mit einer Teillänge aufgenommen. In dem in den Figur 1 bis 3 nicht dargestellten, an das Getriebegehäuse 1 angeflanschten Motorgehäuse sowie auch im Getriebegehäuse 1, beispielsweise im Anschlussbereich zum Motorgehäuse, ist die Welle 4 mit zwei nicht dargestellten Primärlagern (z.B. Kugellagern) gelagert, so dass nach dem Montieren des Motors am Getriebegehäuse 1 bereits durch die beiden Primärlager die erforderliche Ausrichtung der Ankerwelle 4 bzw. deren Achse WA gegeben ist. Im Innenraum 3 ist die Ankerwelle 4 mit einer Schnecke 4.1 versehen, die mit einem nicht dargestellten Schneckenrad an einer ebenfalls nicht dargestellten und im Getriebegehäuse 1 gelagerten Ausgangswelle des Getriebes zusammenwirkt.

Das in der Figur 1 dargestellte, dem Motor entfernt liegende freie Wellenende 4.2 der Ankerwelle 4 ist in einer ein zusätzliches Stützlager bildenden Lageranordnung 5 gelagert. Hierfür reicht das Wellenende 4.2 durch eine Gehäuse- oder Durchtrittsöffnung 6, deren Querschnitt etwas größer ist als der Außenquerschnitt des Wellenendes 4.2, in eine relativ großvolumige im Getriebegehäuse 1 gebildete und zur Außenfläche des Getriebegehäuses hin offene Kammer 7 hinein, in der auf dem Wellenende 4.2 eine hülsenartige, beidendig offene Lagerbuchse 8 aus einem für Lagerbuchsen geeigneten Material, beispielsweise Metall, angeordnet ist. Die Kammer 7 ist mit einer geeigneten, aushärtenden Fixier- oder Füllmasse, beispielsweise mit einem geeigneten thermoplastischen Kunststoff, vollständig ausgefüllt. Diese Masse bildet nach dem Aushärten oder Erstarren einen Einsatz oder Fixier- bzw. Füllkörper 9, durch den nicht nur die auf dem Wellenende 4.2 angeordneten Lagerbuchse 8 am Getriebegehäuse 1 fixiert ist, sondern das Getriebegehäuse 1 im Bereich der Lageranordnung 5 auch absolut wasserdicht verschlossen ist.

Bei der in den Figuren 1 und 2 dargestellten Ausführungsform ist die Kammer 7 so ausgeführt, dass sie an die Durchtrittsöffnung 6 in Richtung der Achse WA anschließend zunächst einen diese Achse konzentrisch umschließenden kreiszylinderförmigen oder im Wesentlichen kreiszylinderförmigen Abschnitt 7.1 bildet, an den sich dann ein ebenfalls kreiszylinderförmiger oder im Wesentlichen kreiszylinderförmiger Abschnitt 7.2 sowie ein sich kegelförmig erweiternder Abschnitt 7.3 anschließen, wobei der sich erweiternde Abschnitt 7.3 die Öffnung der Kammer 7 an die Außenfläche des Getriebegehäuses 1 bildet. Der Durchmesser des Abschnittes 7.1 ist größer als der Durchmesser der Durchtrittsöffnung 6 und auch größer als der Außendurchmesser der Lagerbuchse 8. Weiterhin ist die axiale Länge des Abschnittes 7.1 größer als die axiale Länge der Lagerbuchse 8. Der Abschnitt 7.2 besitzt einen Durchmesser der größer ist als derjenige des Abschnittes 7.1, aber ebenso wie der Abschnitt 7.3 eine axiale Länge, die wesentlich kleiner ist als die axiale Länge des Abschnittes 7.1.

In die den Übergang zwischen den Abschnitten 7.1 und 7.2 bildenden Stufe oder Ringfläche ist eine die Achse WA konzentrisch umschließende und in axialer Richtung zum Abschnitt 7.2 hin offene Ringnut 10 eingearbeitet, die mit ihrer der Achse WA näher liegenden Seite eine Fixier- und Dichtfläche 10.1 (Figur 2a) bildet, wie dies nachstehend noch beschrieben wird. Weiterhin ist im Getriebegehäuse 1 ein in den Abschnitt 7.1 der Kammer 7 mündender Kanal 11 vorgesehen, der mit seiner Längserstreckung radial zur Achse WA liegt und an der mit dem Deckel 2 verschlossenen Seite des Getriebegehäuses 1 offen ist.

Beim Montieren des Antriebs wird zunächst der mit der Ankerwelle 4 vormontierte Motor mit dem Getriebegehäuse 1 verbunden, so dass dann die Ankerwelle 4 bereits durch die beiden Hauptlager mit ihrer Achse WA in der erforderlichen Weise ausgerichtet im Getriebegehäuse 1 angeordnet ist. Auf das durch die Durchtrittsöffnung 6 hindurchgeführte Wellenende 4.2 wird dann von der offenen Seite der Kammer 7 her die Lagerbuchse 8 aufgesetzt, was wegen des im Vergleich zum Außendurchmesser der Lagerbuchse 8 größeren Durchmessers des Abschnittes 7.1 sowie durch den großen Öffnungsquerschnitt der Kammer 7 an der Außenseite des Getriebegehäuses 1 problemlos möglich ist. Das Aufsetzen der Lagerbuchse 8 erfolgt dabei so, dass diese mit ihrer der Durchtrittsöffnung 6 zugewandten Stirnfläche gegen einen am Übergang zwischen der Durchtrittsöffnung 6 und der Kammer 7 gebildeten ringförmigen Bund 12 dicht anliegt, so dass die Durchtrittsöffnung 6 gegen das Innere der Kammer 7 abgedichtet ist. Damit ist der in der Figur 2 dargestellte Montagezustand erreicht.

Anschließend werden die Kammer 7, die Ringnut 10 und der Kanal 11 vollständig mit der den Füllkörper 9 bildenden Füllmasse ausgefüllt, und zwar beispielsweise unter Verwendung eines geeigneten Spritzgießwerkzeugs. Durch das beim Aushärten oder Erstarren auftretende Schwinden legt sich die Füllmasse an der der Achse WA näherliegenden Innenfläche dieser Ringnut 10 besonders fest und dicht an die Innenfläche der Kammer 7 an, so dass der Übergang Innenfläche Kammer 7 / Füllkörper 9 im Verlauf zwischen der offenen Seite der Kammer 7 und der Durchtrittsöffnung 6 dicht, insbesondere auch wasserdicht verschlossen ist. Die aus Figur 2a ersichtliche, der Achse WA näherliegende Innenfläche der Ringnut 10 bildet im Wesentlichen die Fixer- oder Dichtfläche 10.1.

Durch den Kanal 11 bzw. durch den in diesem Kanal aufgenommenen Teil der ausgehärteten Füllmasse ist der Füllkörper 9 mit der in diesem Füllkörper eingebetteten Lagerbuchse 8 verdrehungssicher im Getriebegehäuse 1 gehalten. Da weiterhin bei der dargestellten Ausführungsform die Lagerbuchse 8 an beiden Enden offen ist, dringt die Füllmasse über das offene Ende bis an die in der Lagerbuchse 8 freiliegende Fläche des Wellenendes 4.2 ein, so dass nach dem Aushärten der Füllmasse auch eine axiale Abstützung der Ankerwelle 4 innerhalb der Lagerbuchse 8 erreicht ist.

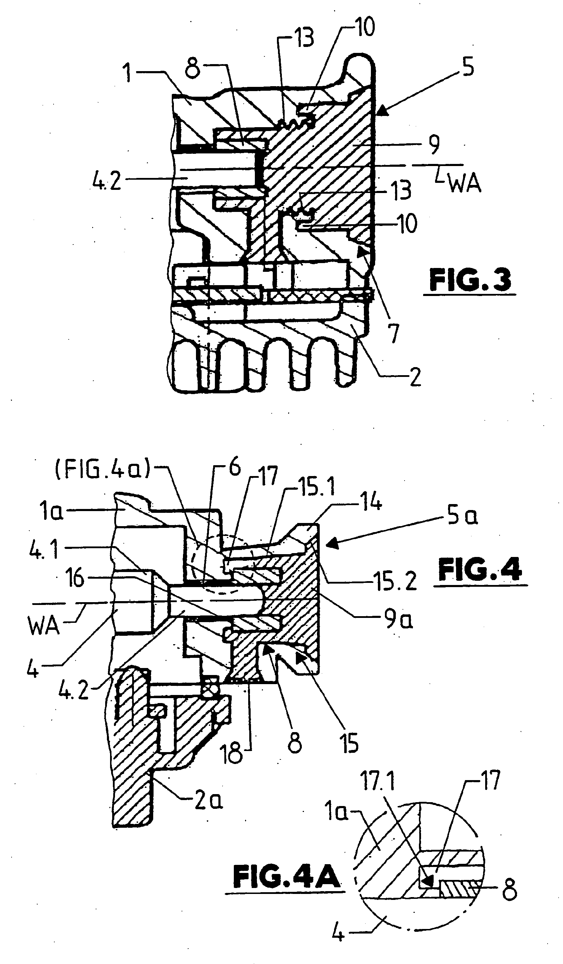

Die Figur 3 zeigt eine Ausführungsform, die sich von der Ausführungsform der Figur 1 und 2 lediglich dadurch unterscheidet, dass die Kammer 7 an ihrer Innenfläche, und zwar bei dieser Ausführungsform speziell an der Innenfläche des Abschnittes 7.1, profiliert, beispielsweise mit einem Gewindeabschnitt 13 versehen ist, um so eine zusätzliche Verankerung des Füllkörpers 9 zu erreichen.

Die Figur 4 zeigt in vereinfachter Darstellung ein Getriebegehäuse 1a eines elektromotorischen Hilfsantriebs mit einem Deckel 2a und mit einer Lageranordnung 5a für das Wellenende 4.2 der Ankerwelle 4. Auch bei dieser Ausführungsform reicht das Wellenende 4.2 durch die Durchtrittsöffnung 6 in eine der Kammer 7 entsprechende und an einem Gehäuseabschnitt 14 gebildete Kammer 15 hinein und ist dort in der Lagerbuchse 8 gelagert, die ihrerseits durch den die Kammer 15 vollständig ausfüllenden Füllkörper 9a fixiert ist. Die an der Gehäuseaußenseite offene Kammer 15 ist bei dieser Ausführungsform so ausgeführt, dass sie in Richtung der Achse WA auf die Durchtrittsöffnung 6 folgend zunächst einen sich leicht kegelstumpfförmig zum offenen Ende der Kammer 15 hin vergrößernden Abschnitt 15.1 und daran anschließend einen sich stärker erweiternden und die Öffnung der Kammer 15 bildenden Abschnitt 15.2 aufweist. Der Innendurchmesser des Abschnittes 15.1 ist wiederum größer als der Außendurchmesser der beidendig offenen Lagerbuchse 8 und auch wesentlich größer als der Durchmesser der Durchtrittsöffnung 6. An der den Übergang zwischen der Durchtrittsöffnung 6 und dem Abschnitt 15.1 bildenden, die Achse WA ringförmig umschließenden und in einer Ebene senkrecht zu dieser Achse angeordneten Ringfläche 16 ist eine die Achse WA konzentrisch umschließende und zur Kammer 15 hin offene Nut 17 eingebracht, und zwar derart, dass auch bei gegen die Ringfläche 16 stirnseitig dicht anliegender Lagerbuchse 8 die Ringnut 17 noch zur Kammer 15 hin offen ist (siehe auch Fig. 4a). Auch bei dieser Ausführungsform ist wiederum ein in die Kammer 15 mündender Kanal 18 vorgesehen.

Nach dem Montieren des in der Zeichnung nicht dargestellten Motors mit der Ankerwelle 4 am Getriebegehäuse 1a wird auf das durch die Durchtrittsöffnung 6 in die Kammer 15 hineinreichende Wellenende 4.2 die Lagerhülse 8 aufgesetzt, und zwar derart, dass diese stirnseitig gegen die Ringfläche 16 anliegt und die Durchtrittsöffnung 6 zur Kammer 15 hin abdichtet. Anschließend werden der Innenraum der Kammer 15, einschließlich der Nut 17 sowie der Kanal 18 mit der den Füllkörper 9a bildenden Füllmasse, beispielsweise thermoplastischen Füllmasse ausgefüllt.

Nach dem Aushärten der Füllmasse ist wiederum ein besonders fester und insbesondere auch dichter Übergang zwischen dem Füllkörper 9a und dem Getriebegehäuse 1a im Bereich der innenliegenden ringförmigen Seitenfläche der Nut 17 erreicht, und zwar durch das Schwinden des den Füllkörper 9a bildenden Materials. Die innenliegenden ringförmigen Seitenfläche der Nut 17 bildet hierbei die in Figur 4a besser erkennbare Fixier oder Dichtfläche 17.1. Durch den im Kanal 18 aufgenommenen Teil des Füllkörpers 9 ist dieser zusätzlich drehfest in der Kammer 15 verankert. Weiterhin bildet der Füllkörper 9a auch eine axiale Abstützung des Wellenendes 4.2 in der Lagerbuchse 8, und zwar durch das dort eingedrungene Füllmaterial.

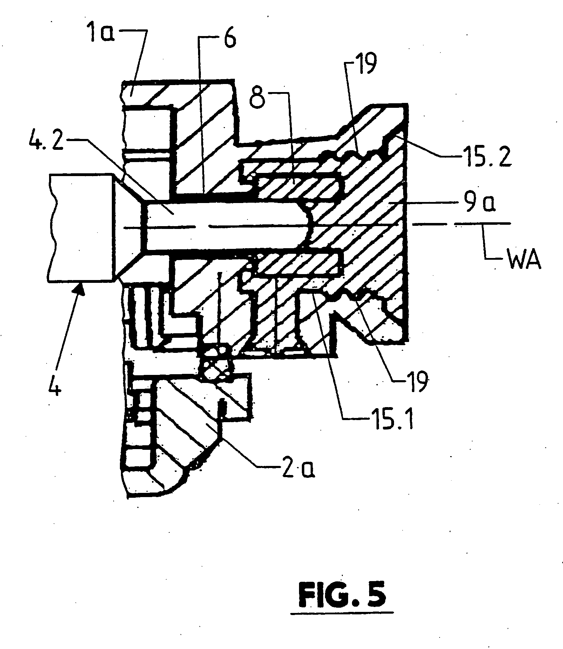

Die Figur 5 zeigt eine weitere Ausführungsform, die sich von der Ausführung der Figur 4 im Wesentlichen nur dadurch unterscheidet, dass die Innenfläche der Kammer 15 in einem Teilbereich des Abschnittes 15.1 profiliert bzw. mit einem Gewindeabschnitt 19 versehen ist, um hierdurch eine zusätzliche Verankerung des Füllkörpers 9a zu erreichen.

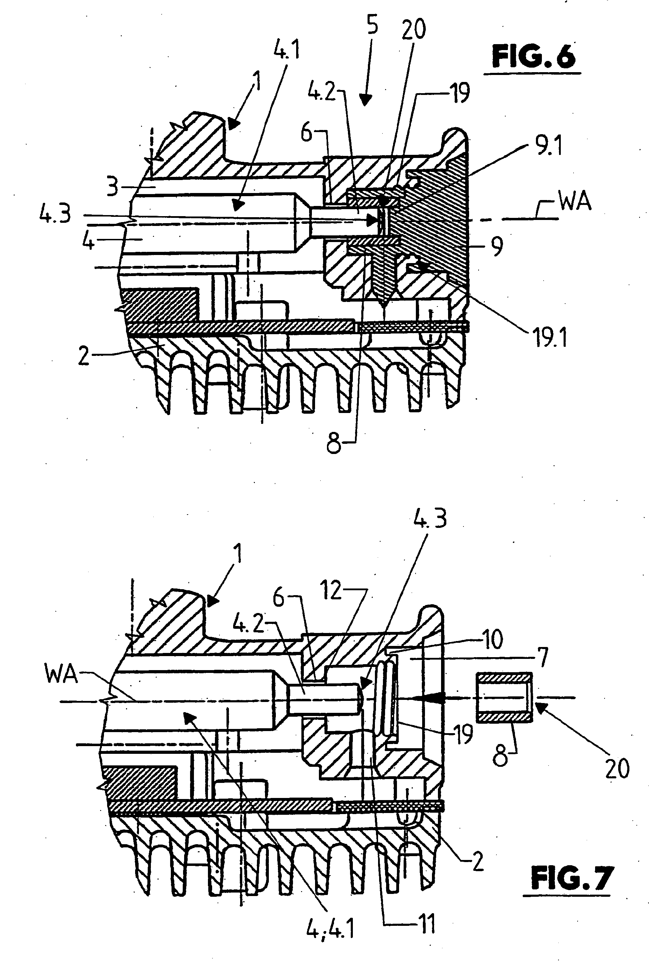

Das in den Figuren 6 - 9 dargestellte Ausführungsbeispiel entspricht im Wesentlichen dem in Figur 3 dargestellten Ausführungsbeispiel mit den darauf bezogenen Beschreibungsteilen, die sich wiederum in weiten Bereichen auch auf das Ausführungsbeispiel gemäß Figuren 1, 2 und 2a und zugehörige Beschreibung beziehen. In den Figuren 6 - 9 werden deshalb auch für gleiche bzw. gleichzusetzende Teile bzw. Details gleiche Bezugszeichen verwendet. Um Wiederholungen zu vermeiden, bezieht sich die Beschreibung dieses Ausführungsbeispiels vorrangig auf die Unterschiede zu den anderen Ausführungsbeispielen.

Der wesentliche Unterschied besteht bei dem Ausführungsbeispiel der Figuren 6 - 9 darin, dass hier innerhalb der Lagerbuchse 8 zwischen der Stirnseite 4.3 des Wellenendes 4.2 und dem in die Lagerbuchse 8 hineinragenden Teilabschnitt 9.1 des Füllkörpers 9 eine Anlaufscheibe 20 angeordnet ist. Die Anlaufscheibe 20 besteht normalerweise aus Metall, wobei Stahl bevorzugt ist. In Fällen mit speziellen Beanspruchungen könnte die Anlaufscheibe aber auch aus Keramik gefertigt sein. Innerhalb der Lageranordnung 5 liegt diese Anlaufscheibe 20 spielfrei gegen die Stirnseite 4.3 des Wellenendes 4.2 an und wird ihrerseits von dem in die Lagerbuchse 8 hineinreichenden Teilabschnitt 9.1 des Füllkörpers 9 abgestützt. Zusätzlich zu der sicheren Fixierung der Lagerbuchse 8 und zu dem wasserdichten Verschluss der Lageranordnung 5 durch den eingespritzten Füllkörper 9 wird durch diese Maßnahme sowohl die Ankerwelle 4 axialspielfrei gehalten als auch andererseits ein reibungsarmer Lauf der Ankerwelle 4 an dieser Axialabstützung erreicht. Die bei Drehung der Ankerwelle 4 zwischen der Stirnseite 4.3 und der Anlaufscheibe 20 wirkende Reibung wird noch weiter verringert, wenn die Stirnseite 4.3 des Wellenendes 4.2 und/oder die Anlaufscheibe 20 für eine gegenseitige punktförmige Anlage ausgebildet ist. Dazu ist bevorzugt die Stirnseite 4.3 des Wellenendes 4.2 konvex geformt, wobei vor allem eine ballige oder kugelsegmentförmige Gestalt verwendet wird. Alternativ oder zusätzlich kann die Anlaufscheibe 20 eine zur Stirnseite 4.3 hin konvexe Form aufweisen.

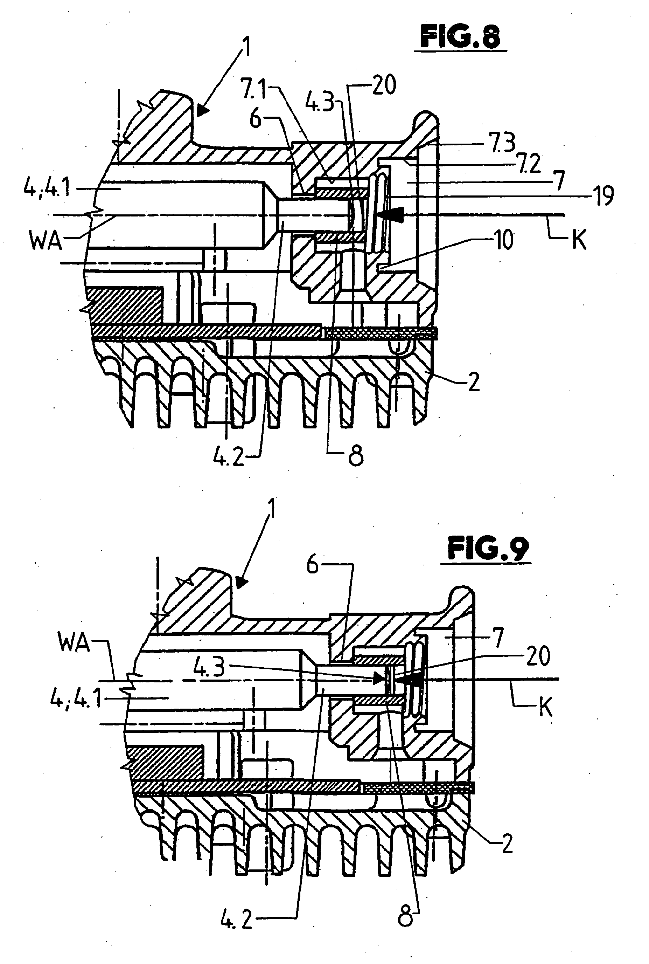

In Figur 7 ist die Lagerbuchse 8 in einem Vormontagezustand gezeigt. In das der Stirnseite 4.3 des Wellenendes 4.2 entfernt liegende Ende der Lagerbuchse 8 ist die Anlaufscheibe 20 eingepresst, so dass sie an der Innenseite der Lagerbuchse 8 verspannt ist. Die Lagerbuchse 8 wird wiederum axial auf das Wellenende 4.2 aufgeschoben bis sie, wie in den Figuren 8 und 9 gezeigt, mit ihrer inneren Stirnseite an der Ringfläche 12 anliegt, welche die Durchtrittsöffnung 6 umgibt. Nun wird die Anlaufscheibe 20 mit einer Kraft K, welche die Verspannkraft der Anlaufscheibe in der Lagerbuchse 8 überwindet, axial einwärts bis zur Anlage gegen die Stirnseite 4.3 des Wellenendes 4.2 verschoben. Durch die Kraft K, mit welcher dann die Anlaufscheibe 20 gegen die Stirnseite gepresst wird, wird auch das Axialspiel der Ankerwelle eliminiert. In diesem Stadium erfolgt dann das Einspritzen der Füllmasse in der bei den anderen Ausführungsbeispielen bereits beschriebenen Art in die Kammer 7, so dass sich nach Erstarren der Füllmasse der bereits beschriebene und in Figur 6 dargestellte Füllkörper 9 mit seinem in die Lagerbuchse 8 hineinreichenden Teilabschnitt 9.1 bildet.

Es wird noch besonders darauf hingewiesen, dass an derselben Lageranordnung mehrere Fixier- und Dichtflächen vorgesehen sein können, auf welche das Füllmaterial beim Erstarren bzw. Aushärten dichtend aufschrumpft. Insbesondere können an ein und derselben Lagerstelle eine Fixier- oder Dichtfläche gemäß der Ausführung der Figuren 1, 2 und 2a und eine Fixier- oder Dichtfläche gemäß der Ausführung der Figuren 4 und 4a verwirklicht sein.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

So wurde voranstehend davon ausgegangen, dass die Fixier- oder Füllmasse ein thermoplastischer Kunststoff ist. Auch die Verwendung anderer Materialien ist grundsätzlich möglich, beispielsweise die Verwendung von nicht thermoplastischen Kunststoffen oder niedrig schmelzenden Metall-Legierungen.

### Bezugszeichenliste

- 1, 1 a: Getriebegehäuse
- 2, 2a: Deckel
- 3: Innenraum des Getriebegehäuses
- 4: Ankerwelle
- 4.1: Schnecke auf der Ankerwelle
- 4.2: Wellenendes
- 4.3: Stirnseite
- 5, 5a: Lageranordnung
- 6: Durchtrittsöffnung
- 7: Kammer
- 7.1, 7.2, 7.3: Abschnitt der Kammer 7
- 8: Lagerbuchse
- 9,9a: Füllkörper
- 9.1: Teilabschnitt
- 10: Ringnut
- 10.1: Fixier- oder Dichtfläche
- 11: Kanal
- 12: Ringfläche oder Bund
- 13: Gewindeabschnitt
- 14: Abschnitt des Gehäuses 1a
- 15: Kammer
- 15.1, 15.2: Abschnitt der Kammer
- 16: Ringfläche oder Bund
- 17: Ringnut
- 17.1: Fixier- oder Dichtfläche
- 18: Kanal
- 19: Gewindeabschnitt
- 20: Anlaufscheibe
- K: Kraft
- WA: Achse der Ankerwelle

## Patentansprüche

1. Lageranordnung für eine Welle (4), insbesondere eine Ankerwelle, eines elektromotorischen Hilfsantriebes für Fahrzeuge, bei der die Welle (4) mit einem Wellenende (4.2) durch eine Gehäuse- oder Durchtrittsöffnung (6) in eine am Getriebegehäuse (1, 1a) ausgebildete Kammer (7, 15) hineinreicht und dort in einer Lagerbuchse (8) gelagert ist, die gegen eine die Durchtrittsöffnung (6) umschließende Fläche stirnseitig anliegt, und bei der die Lagerbuchse (8) in der Kammer (7, 15) durch einen die Kammer (7, 15) nach außen hin abdichtenden Fixier- oder Füllkörper (9, 9a) aus einer ausgehärteten Füllmasse fixiert ist,
**dadurch gekennzeichnet,**
**dass** die Kammer (7, 15) mit wenigstens einer die Achse (WA) der Welle (4) umschließenden Fixier- oder Dichtfläche (10.1, 17.1) versehen ist, gegen die der Füllkörper (9, 9a) durch Schwinden des Füllmaterials beim Aushärten angepresst anliegt.

2. Lageranordnung nach Anspruch 1, **dadurch gekennzeichnet, dass** die Fixier- oder Dichtfläche (10.1, 17.1) eine der Achse (WA) der Welle (4) abgewandte Fläche ist.

3. Lageranordnung nach Anspruch 1 oder 2, **dadurch gekennzeichnet, dass** die wenigstens eine Fixier- und Dichtfläche (10.1, 17.1) am Übergang zwischen dem Füllkörper (9, 9a) und der Innenfläche der Kammer (7, 15) vorgesehen ist, und zwar im Verlauf dieses Übergangs zwischen einer offenen Seite der Kammer (7, 15) und der Durchtrittsöffnung (6).

4. Lageranordnung nach einem der vorhergehenden Ansprüche, **dadurch gekennzeichnet, dass** die Fixier- und Dichtfläche (10.1, 17.1) die Wellenachse (WA) konzentrisch oder annähernd bzw. im wesentlichen konzentrisch umschließt.

5. Lageranordnung nach einem der vorhergehenden Ansprüche, **dadurch gekennzeichnet, dass** die Kammer (7, 15) wenigstens zwei in Richtung der Wellenachse (WA) aneinander anschließende Abschnitte (7.1, 7.2, 7.3; 15.1, 15.2) mit unterschiedlichem Durchmesser aufweisen.

6. Lageranordnung nach einem der vorhergehenden Ansprüche, **dadurch gekennzeichnet, dass** die Fixier- oder Dichtfläche (10.1, 17.1) von der radial inneren Seitenfläche einer die Wellenachse (WA) umschließenden Nut (10, 17) gebildet ist.

7. Lageranordnung nach Anspruch 6, **dadurch gekennzeichnet, dass** die die Fixier- oder Dichtfläche (10.1) bildende Nut (10) am Übergang zwischen zwei Abschnitten (7.1, 7.2) der Kammer (7) vorgesehen ist.

8. Lageranordnung nach einem der vorhergehenden Ansprüche, **dadurch gekennzeichnet, dass** die die Fixier- oder Dichtfläche (17.1) bildende Nut (17) an einer die Durchtrittsöffnung (6) umgebenden Fläche (16) vorgesehen ist.

9. Lageranordnung nach einem der vorhergehenden Ansprüche, **dadurch gekennzeichnet, dass** die Kammer (7, 15) zumindest an einem Teil ihrer Innenfläche profiliert, insbesondere mit wenigstens einem Gewindeabschnitt (13, 19) versehen ist.

10. Lageranordnung nach einem der vorhergehenden Ansprüche, **gekennzeichnet, durch** wenigstens einen seitlich in die Kammer (7, 15) mündenden und ebenfalls mit der den Füllkörper (9, 9a) bildenden Füllmasse ausgefüllten Kanal (11, 18).

11. Lageranordnung nach Anspruch 10, **dadurch gekennzeichnet, dass** der wenigstens eine Kanal (11, 18) bezogen auf die Wellenachse (WA) radial oder annähernd radial in die Kammer (7, 15) mündet.

12. Lageranordnung nach Anspruch 10 oder 11, **dadurch gekennzeichnet, dass** der Kanal (11) zu einer mit einem Deckel (2) verschlossenen Seite des Getriebegehäuses (1) offen ist.

13. Lageranordnung nach einem der vorhergehenden Ansprüche, **dadurch gekennzeichnet, dass** die Kammer (7, 15) einen sich zur offenen Seite hin vergrößernden Querschnitt aufweist.

14. Lageranordnung nach Anspruch 13, **dadurch gekennzeichnet, dass** sich die Kammer (7, 15) zu oder an ihrer offenen Seite trichter- oder kegelstumpfartig erweitert.

15. Lageranordnung nach einem der vorhergehenden Ansprüche, **dadurch gekennzeichnet, dass** die Kammer (7, 15) von wenigstens einem die Wellenachse (WA) konzentrisch umschließenden zylinder- oder kegelstumpfförmigen Abschnitt (7.1, 7.2, 7.3; 15.1, 15.2) gebildet ist.

16. Lageranordnung nach einem der vorhergehenden Ansprüche, **dadurch gekennzeichnet, dass** die Lagerbuchse (8) als beidendig offene Buchse ausgebildet ist, und dass der Füllkörper (9, 9a) mit einem Teilabschnitt in das der Durchtrittsöffnung (6) abgewandte Ende der Lagerbuchse (8) hineinreicht und dort eine axiale Abstützung für die Welle (4) bildet.

17. Lageranordnung nach Anspruch 16, **dadurch gekennzeichnet, dass** innerhalb der Lagerbuchse (8) zwischen der Stirnseite der des Wellenendes (4.2) und dem in die Lagerbuchse (8) hineinreichenden Teilabschnitt (9.1) des Füllkörpers (9, 9a) eine Anlaufscheibe (20) angeordnet ist.

18. Lageranordnung nach Anspruch 17, **dadurch gekennzeichnet, dass** die durch den in die Lagerbuchse (8) hineinreichenden Teilabschnitt des Füllkörpers (9, 9a) abgestützte Anlaufscheibe (20) spielfrei gegen die Stirnseite (4.3) des Wellenendes (4.2) anliegt.

19. Lageranordnung nach einem der Ansprüche 17-18, **dadurch gekennzeichnet, dass** die innerhalb der Lagerbuchse (8) befindliche Stirnseite (4.3) des Wellendes (4.2) und/oder die Anlaufscheibe (20) für eine gegenseitige punktförmige Anlage gegen die Anlaufscheibe (20) ausgebildet ist.

20. Lageranordnung nach Anspruch 19, **dadurch gekennzeichnet, dass** die Stirnseite (4.3) des Wellenendes (4.2) konvex geformt ist und dabei vorzugsweise ballig oder kugelsegmentförmig ist.

21. Lageranordnung nach Anspruch 17, **dadurch gekennzeichnet, dass** die Anlaufscheibe (20) in einem Vormontagestadium an der Innenseite der Lagerbuchse (8) verspannt gehalten ist, derart, dass die Anlaufscheibe (20) während der oder durch die Montage der Lageranordnung zur Beseitigung eines Axialspiels der Ankerwelle (4) in axialer Richtung verschiebbar ist.

22. Lageranordnung nach einem der vorhergehenden Ansprüche 17-21, **dadurch gekennzeichnet, dass** die Anlaufscheibe (20) aus Metall oder aus Keramik besteht.

23. Lageranordnung nach einem der vorhergehenden Ansprüche 1-15, **dadurch gekennzeichnet, dass** die Lagerbuchse (8) als einseitig offene Buchse ausgebildet ist.

24. Lageranordnung nach einem der vorhergehenden Ansprüche, **dadurch gekennzeichnet, dass** die den Füllkörper (9, 9a) bildende Füllmasse ein Kunststoff ist, insbesondere ein thermoplastischer Kunststoff.

25. Lageranordnung nach einem der vorhergehenden Ansprüche, **dadurch gekennzeichnet, dass** die den Füllkörper (9, 9a) bildenden Füllmasse eine niedrigschmelzende Metall-Legierung ist.

## Claims

1. A bearing assembly for a shaft (4), more particularly an armature shaft, of an auxiliary driving system with an electric motor for motor vehicles, in which assembly the shaft (4) goes at one end (4.2) through an orifice of the crank case or passage orifice (6) to go into a chamber (7, 15) provided in the gearbox casing (1,1a) and is accommodated in the bushing (8) the front side of which rests against a surface surrounding the passage orifice (6) and in which assembly the bushing (8) is fixed in the chamber (7, 15) by a filler or fixing body (9, 9a) which is made of a hardened filler material and which provides the tightness of the chamber (7, 15) to the outside,
**characterised in that** the chamber (7, 15) is provided with at least one fixing or tightness surface (10.1, 17.1) which surrounds the axis (WA) of the shaft (4) and against which the filler body (9, 9a) is resting tight under the effect of the shrinkage of the filler material during the hardening.

2. A bearing assembly according to claim 1, **characterised in that** the fixing or tightness surface (10.1, 17.1) is a surface deviated from axis (WA) of the shaft (4).

3. A bearing assembly according to claim 1 or 2, **characterised in that** said at least one fixing or tightness surface (10.1, 17.1) is provided at the level along the transition between the filler body (9, 9a) and the inner face of the chamber (7, 15) i.e. on the path of such transition between an open side of the chamber (7, 15) and the passage orifice (6).

4. A bearing assembly according to any one of the preceding claims, **characterised in that** the fixing or tightness surface (10.1, 17.1) surrounds the axis (WA) of the shaft in a concentric way or almost concentric way, i.e. a substantially concentric way.

5. A bearing assembly according to any one of the preceding claims, **characterised in that** the chambers (7, 15) include at least two parts (7.1, 7.2, 7.3; 15.1, 15.2) with different diameters, which are contiguous in the direction of the axis (WA) of the shaft.

6. A bearing assembly according to any one of the preceding claims, **characterised in that** the fixing or tightness surface (10.1, 17.1) is formed by the lateral, radially internal, face of a groove (10, 17) surrounding the axis (WA) of the shaft.

7. A bearing assembly according to claim 6, **characterised in that** the groove (10) forming the fixing or tightness surface (10.1) is provided at the level of the transition between two parts (7.1, 7.2) of the chamber (7).

8. A bearing assembly according to any one of the preceding claims, **characterised in that** the groove (17) forming the fixing or tightness surface (17.1) is provided at the level of a surface (16) surrounding the passage orifice (6).

9. A bearing assembly according to any one of the preceding claims, **characterised in that** the chamber (7, 15) is profiled at least on one part of the inner face thereof, more particularly with at least one threaded segment (13, 19).

10. A bearing assembly according to any one of the preceding claims, **characterised by** at least one duct (11, 18) opening laterally into the chamber (7, 15) and also filled with a filler material forming the filler body (9, 9a).

11. A bearing assembly according to claim 10, **characterised in that** said at least one duct (11, 18) opens into the chamber (7, 15) radially or almost radially with respect to the axis (WA) of the shaft.

12. A bearing assembly according to claim 10 or 11, **characterised in that** the duct (11) is open towards a side of the gearbox casing (1) closed by a lid (2).

13. A bearing assembly according to any one of the preceding claims, **characterised in that** the chamber (7, 15) has a section increasing towards the open side.

14. A bearing assembly according to claim 13, **characterised in that** the chamber (7, 15) widens in a funnel shape or in a truncated cone shape towards or at the level of the open side thereof.

15. A bearing assembly according to any one of the preceding claims, **characterised in that** the chamber (7, 15) is formed by at least one cylindrical or truncated part (7.1, 7.2, 7.3; 15.1, 15.2) surrounding the axis (WA) of the shaft in a concentric way.

16. A bearing assembly according to any one of the preceding claims, **characterised in that** the bushing (8) is made in the shape of a bushing open at both ends and **in that** the filler body (9, 9a) is formed with a part in which the end of the bushing (8) engages as it is deviated from the passage orifice (6) and provides therein an axial support for the shaft (4).

17. A bearing assembly according to claim 16, **characterised in that** an abutment plate (20) is positioned inside the bushing (8) between the front face of the shaft end (4.2) and the part (9.1) of the filler body (9, 9a) engaging in said bushing (8).

18. A bearing assembly according to claim 17, **characterised in that** the abutment plate (20) supported by the part of the filler body (9, 9a) engaging in the bushing (8) rests without any clearance against the front face (4.3) of the shaft end (4.2).

19. A bearing assembly according to any one of claims 17 to 18, **characterised in that** the front face (4.3) of the shaft end (4.2) located inside the bushing (8) and/or the abutment plate (20) are made for a punctual reciprocal support against the abutment plate (20) .

20. A bearing assembly according to claim 19, **characterised in that** the front face (4.3) of the shaft end (4.2) has a convex shape and is further, preferably domed, or has the shape of a spherical segment.

21. A bearing assembly according to claim 17, **characterised in that** the abutment plate 20 is held by clamping during a preliminary mounting phase against the inner face of the bushing (8), so that during the mounting of the bearing assembly or under the effect thereof, the abutment plate (20) can be moved in the axial direction in order to eliminate an axial clearance of the armature shaft (4).

22. A bearing assembly according to any one of claims 17 to 21, **characterised in that** the abutment plate (20) is made of metal or ceramics.

23. A bearing assembly according to any one of claims 1 to 15, **characterised in that** the bushing (8) is made in the shape of a bushing open on one side.

24. A bearing assembly according to any one of the preceding claims, **characterised in that** the filler material forming the filler body (9, 9a) is a plastic material, more particularly a thermoplastic material.

25. A bearing assembly according to any one of preceding claims, **characterised in that** the filler material forming the filler body (9, 9a) is a low melting point metal alloy.

## Revendications

1. Ensemble de palier pour un arbre (4), en particulier un arbre d'un induit, d'un système d'entraînement auxiliaire à moteur électrique pour des véhicules automobiles, dans lequel ensemble l'arbre (4) passe avec une extrémité (4.2) à travers un orifice du carter ou orifice de passage (6) pour pénétrer dans une chambre (7, 15), réalisée dans le carter d'engrenages (1, 1a), et y est logée dans un coussinet (8), qui est en appui avec le côté frontal contre une surface entourant l'orifice de passage (6), et dans lequel ensemble le coussinet (8) est fixé dans la chambre (7, 15) par un corps de remplissage ou de fixation (9, 9a), qui est réalisé dans une matière de remplissage durcie et qui assure l'étanchéité de la chambre (7, 15) vers l'extérieur,
**caractérisé en ce que** la chambre (7, 15) est munie d'au moins une surface de fixation ou d'étanchéité (10.1, 17.1), qui entoure l'axe (WA) de l'arbre (4) et contre laquelle le corps de remplissage (9, 9a) est en appui serré sous l'effet du retrait de la matière de remplissage pendant le durcissement.

2. Ensemble de palier selon la revendication 1, **caractérisé en ce que** la surface de fixation ou d'étanchéité (10.1, 17.1) est une surface détournée de l'axe (WA) de l'arbre (4).

3. Ensemble de palier selon la revendication 1 ou 2, **caractérisé en ce que** ladite au moins une surface de fixation ou d'étanchéité (10.1, 17.1) est prévue au niveau de la transition entre le corps de remplissage (9, 9a) et la face intérieure de la chambre (7, 15), à savoir dans le trajet de cette transition entre un côté ouvert de la chambre (7, 15) et l'orifice de passage (6) .

4. Ensemble de palier selon l'une quelconque des revendications précédentes, **caractérisé en ce que** la surface de fixation ou d'étanchéité (10.1, 17.1) entoure concentriquement ou à peu près, c'est-à-dire sensiblement concentriquement l'axe (WA) de l'arbre.

5. Ensemble de palier selon l'une quelconque des revendications précédentes, **caractérisé en ce que** les chambres (7, 15) comportent au moins deux parties (7.1, 7.2, 7.3 ; 15.1, 15.2) avec des diamètres différents, adjacentes entre elles dans la direction de l'axe (WA) de l'arbre.

6. Ensemble de palier selon l'une quelconque des revendications précédentes, **caractérisé en ce que** la surface de fixation ou d'étanchéité (10.1, 17.1) est formée par la face latérale, radialement intérieure, d'une rainure (10, 17) entourant l'axe (WA) de l'arbre.

7. Ensemble de palier selon la revendication 6, **caractérisé en ce que** la rainure (10), formant la surface de fixation ou d'étanchéité (10.1), est prévue au niveau de la transition entre deux parties (7.1, 7.2) de la chambre (7).

8. Ensemble de palier selon l'une quelconque des revendications précédentes, **caractérisé en ce que** la rainure (17), formant la surface de fixation ou d'étanchéité (17.1), est prévue au niveau d'une surface (16) entourant l'orifice de passage (6).

9. Ensemble de palier selon l'une quelconque des revendications précédentes, **caractérisé en ce que** la chambre (7, 15) est profilée au moins sur une partie de sa face intérieure, en particulier avec au moins un tronçon fileté (13, 19).

10. Ensemble de palier selon l'une quelconque des revendications précédentes, **caractérisé par** au moins un conduit (11, 18) débouchant latéralement dans la chambre (7, 15) et également rempli d'une matière de remplissage formant le corps de remplissage (9, 9a).

11. Ensemble de palier selon la revendication 10, **caractérisé en ce que** ledit au moins un conduit (11, 18) débouche dans la chambre (7, 15) radialement ou à peu près radialement par rapport à l'axe (WA) de l'arbre.

12. Ensemble de palier selon la revendication 10 ou 11, **caractérisé en ce que** le conduit (11) est ouvert vers un côté du carter d'engrenages (1), fermé par un couvercle (2).

13. Ensemble de palier selon l'une quelconque des revendications précédentes, **caractérisé en ce que** la chambre (7, 15) a une section qui augmente vers le côté ouvert.

14. Ensemble de palier selon la revendication 13, **caractérisé en ce que** la chambre (7, 15) s'élargit en forme d'entonnoir ou de cône tronqué vers ou au niveau de son côté ouvert.

15. Ensemble de palier selon l'une quelconque des revendications précédentes, **caractérisé en ce que** la chambre (7, 15) est formée par au moins une partie (7.1, 7.2, 7.3 ; 15.1, 15.2) cylindrique ou tronconique entourant concentriquement l'axe (WA) de l'arbre.

16. Ensemble de palier selon l'une quelconque des revendications précédentes, **caractérisé en ce que** le coussinet (8) est réalisé sous la forme d'un coussinet ouvert aux deux extrémités et **en ce que** le corps de remplissage (9, 9a) est formé avec une partie dans laquelle s'engage l'extrémité du coussinet (8), détournée de l'orifice de passage (6), et y forme un appui axial pour l'arbre (4).

17. Ensemble de palier selon la revendication 16, **caractérisé en ce qu'**une plaque de butée (20) est disposée à l'intérieur du coussinet (8) entre la face frontale de l'extrémité d'arbre (4.2) et la partie (9.1) du corps de remplissage (9, 9a), s'engageant dans le coussinet (8).

18. Ensemble de palier selon la revendication 17, **caractérisé en ce que** la plaque de butée (20), supportée par la partie du corps de remplissage (9, 9a), s'engageant dans le coussinet (8), est en appui sans jeu contre la face frontale (4.3) de l'extrémité d'arbre (4.2).

19. Ensemble de palier selon l'une quelconque des revendications 17 à 18, **caractérisé en ce que** la face frontale (4.3) de l'extrémité d'arbre (4.2), située à l'intérieur du coussinet (8), et/ou la plaque de butée (20) sont réalisées pour un appui réciproque ponctuel contre le plaque de butée (20).

20. Ensemble de palier selon la revendication 19, **caractérisé en ce que** la face frontale (4.3) de l'extrémité d'arbre (4.2) a une forme convexe et, en outre, est de préférence bombée ou en forme de segment sphérique.

21. Ensemble de palier selon la revendication 17, **caractérisé en ce que** la plaque de butée (20) est maintenue par serrage pendant une phase de montage préliminaire contre la face intérieure du coussinet (8), de telle sorte que, pendant ou sous l'effet du montage de l'ensemble de palier, la plaque de butée (20) peut être déplacée dans la direction axiale pour supprimer un jeu axial de l'arbre (4) de l'induit.

22. Ensemble de palier selon l'une quelconque des revendications 17 à 21, **caractérisé en ce que** la plaque de butée (20) est réalisée en métal ou en céramique.

23. Ensemble de palier selon l'une quelconque des revendications 1 à 15, **caractérisé en ce que** le coussinet (8) est réalisé sous la forme d'un coussinet ouvert sur un côté.

24. Ensemble de palier selon l'une quelconque des revendications précédentes, **caractérisé en ce que** la matière de remplissage formant le corps de remplissage (9, 9a) est une matière plastique, en particulier une matière thermoplastique.

25. Ensemble de palier selon l'une quelconque des revendications précédentes, **caractérisé en ce que** la matière de remplissage formant le corps de remplissage (9, 9a) est un alliage métallique à bas point de fusion.
